(19) Europäisches Patentamt

European Patent Office

Office européen des brevets

(11) **EP 4 752 013 A1**

(12) **EUROPEAN PATENT APPLICATION**

(43) Date of publication:
**03.06.2026  Bulletin 2026/23**

(21) Application number: **24216873.0**

(22) Date of filing: **02.12.2024**

(51) International Patent Classification (IPC):
**B60T 8/175** [(2006.01)]

(52) Cooperative Patent Classification (CPC):
**B60T 8/175**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **Özkan, Basar**
  **417 10 Göteborg (SE)**
• **Laine, Leo**
  **414 84 Göteborg (SE)**

(74) Representative: **Valea AB**
**Box 1098**
**405 23 Göteborg (SE)**

(54) **HANDLING A LONGITUDINAL SLIP OF A WHEEL**

(57)  A computer system (700) comprising processing circuitry (702) configured to handle a longitudinal slip of a wheel (11) of a vehicle (1) is provided. The processing circuitry (702) is configured to, determine a first longitudinal slip and a first tire force of a tire of the wheel (11). The processing circuitry (702) is configured to, with respect to a torque needed to provide the first tire force, control a torque applied to the wheel (11) to attain a second tire force, the second tire force being lower than the first tire force with respect to a predefined relationship. The processing circuitry (702) is configured to determine a second longitudinal slip associated with the second tire force. The processing circuitry (702) is configured to, based on the second longitudinal slip, determine a slip or slip interval for controlling the longitudinal slip of the wheel (11).

Fig. 1

**EP 4 752 013 A1**

**Description**

**TECHNICAL FIELD**

The disclosure relates generally to vehicle motion management. In particular aspects, the disclosure relates to handling a longitudinal slip of a wheel. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

When vehicles apply torque to wheels to move forward or brake, there is a certain amount of longitudinal slip that occurs. This means that a speed of the wheel moving forward is not the same as the radius multiplied by angular velocity of the tire. As the torque applied to the wheel increases, the tire force also increases. The amount of slip increases as a torque applied to the wheel increases. Initially the increase of slip is quite linear with respect to the increase of tire force until a tire gets close to a grip limit. After this point, if the torque is increased even more, the tire loses grip and starts spinning.

Some methods for handling slip may limit a longitudinal slip of a tire so that better vehicle dynamics performance can be achieved. The limit may be based on predefined threshold of slips or road conditions. However, these methods still are inaccurate and may limit a slip too much or allow a too high slip, thereby providing less grip and sub-optimal vehicle dynamics.

Hence, there is a strive to improve slip management of a vehicle.

**SUMMARY**

According to a first aspect of the disclosure, a computer system comprising processing circuitry configured to, as part of a slip management process, handle a longitudinal slip of a wheel of a vehicle. A motion of the wheel is at least partly controlled by an electric motor or combustion engine of the vehicle. Additionally, a brake system may also control the motion of the wheel.

The processing circuitry is configured to determine a first longitudinal slip by receiving input indicating the first longitudinal slip. Alternatively, the processing circuitry is configured to determine the first longitudinal slip by detecting a longitudinal slip of the wheel when the motion of the wheel fulfills a predefined triggering condition.

The processing circuitry is configured to determine a first tire force of a tire of the wheel by receiving input indicating the first tire force. The first tire force may represent a maximum limit for achievable tire force, or a predefined fraction thereof. Alternatively, the processing circuitry is configured to determine the first tire force by being configured to:

- maintain the first longitudinal slip of the wheel, and
- determine the first tire force by at least one of:

  ○ determine a steady state tire force, or
  ○ determine a tire force in response to maintaining the first longitudinal slip for a first time period.

The first longitudinal slip may typically be above a predefined threshold which may represent when the wheel starts spinning, and it is thereby known by tire force and slip models that the corresponding first tire force of the first longitudinal slip is within an interval from a maximum tire force of the wheel when achieved under a steady state condition, i.e., when the first longitudinal slip has occurred for some time and no change in tire force above a set threshold is present. The first tire force and/or first longitudinal slip can also be obtained from input from a user or by other systems.

The processing circuitry is configured to, with respect to a torque needed to provide the first tire force, control a torque applied to the wheel to attain a second tire force. The second tire force is lower than the first tire force with respect to a predefined relationship. The predefined relationship may be a predefined difference or quotient or fraction or percentage or any suitable relationship, either with respect to the tire force, or with respect to a torque producing respective tire force. For example, the second tire force may be set to be 50-75% of the first tire force and/or the torque producing the second tire force may be set to be 50-75% of the torque producing the first tire force..

The processing circuitry is configured to determine a second longitudinal slip associated with the second tire force in response to at least one of: maintaining the second tire force for a second time period, or applying the second tire force as a steady state tire force.

The processing circuitry is configured to, based on the second longitudinal slip, determine a slip or slip interval for controlling the longitudinal slip of the wheel.

The first aspect of the disclosure may seek to improve slip management of the vehicle.

A technical benefit may include improved vehicle dynamics and improved control of the vehicle. This is since a slip of the vehicle can be more efficiently controlled for the vehicle such that the longitudinal slip for controlling the vehicle corresponds to a high tire force but without the risk of a excessive slip where a wheel easily starts spinning. As the longitudinal slip can be set to be relatively low, the wheel may be able to better produce lateral forces. Otherwise, when a tire has high longitudinal slip which is what otherwise may occur when torque is high, the tire cannot produce a sufficient lateral force which may make the vehicle unstable, e.g., if the torque is on the rear tires. If the front tires have very high slip, steering may not work properly because you cannot produce lateral force on the front tires. Hence, examples herein may therefore improve vehicle control by having the slip lower but with high tire force.

Furthermore, since the longitudinal slip of the wheel can be controlled based on the second longitudinal slip, which corresponds to the second tire force. The second longitudinal slip can be known to be relatively low, while the second tire force can be known to be relatively high, as will be explained below.

Firstly, this is since the second longitudinal slip will be lower than the first longitudinal slip since the applied torque of the wheel is lower. Furthermore, the second tire force can still be high since the predefined relationship can be arranged to ensure that the torque is lowered with respect to a predefined knowledge and/or tuned based on how tire forces behave with respect to a different slip.

In particular, when the motion of the wheel fulfills the predefined triggering condition, it can be ensured that the corresponding first tire force is always close to a maximum tire force of the wheel, i.e., within an interval of the maximum tire force.

This is since the behavior of tire forces and longitudinal slip is such that when the wheel starts spinning, i.e., when an increased slip affect the tire force by less than a threshold, it may be known due to tire dynamics that the tire force is within said interval of the maximum tire force, typically within 90% of the maximum tire force. It follows that the first tire force is at least very high. Such maximum forces or slips can also be received as inputs if other vehicles systems have them available.

While exact knowledge of how a function describing tire forces and slip behaves is not available, the predefined relationship can be tuned to serve as a conservative function for finding the second longitudinal slip with a relatively low slip and the second tire force with a relatively high tire force.

The predefined relationship for defining the second tire force with respect to the first tire force may then accurately pinpoint a high tire force with a relatively low slip. The predefined relationship can be determined due to a predictive nature of tire forces and slip. For example, a second tire force of 75% of the first tire force may still yield a high tire force, but correspond to a significantly lower slip, thereby improving vehicle dynamics and control of the vehicle.

Optionally in some examples, including in at least one preferred example, the processing circuitry is configured to determine the slip or slip interval further based on the first longitudinal slip.

A technical benefit may include improved vehicle dynamics. This is since the vehicle can be controlled further based on the first longitudinal slip, such as having the first longitudinal slip as an upper limit, and the second longitudinal slip as a lower limit.

Optionally in some examples, including in at least one preferred example, the processing circuitry is configured to determine the slip or slip interval by determining the slip or slip interval based on the second longitudinal slip and the first longitudinal slip.

A technical benefit may include improved vehicle dynamics. This is since the vehicle can be controlled with a slip or slip interval based on both the first and second longitudinal slip, such as using any suitable function, value, or interval with respect to the first and second longitudinal slip.

As discussed above, exact knowledge of how a function describing tire forces and slip behaves is not available, due to knowledge of a general behavior of such a function, it can be known that between the first and second longitudinal slip, there are longitudinal slips achieving a higher maximum tire force than the first and second tire force, and it can also be known that the first and second longitudinal slips both achieve relatively high tire forces, within an interval from the maximum achievable tire force.

Optionally in some examples, including in at least one preferred example, the processing circuitry is configured to:

- as part of an updating process: increase the second longitudinal slip by being configured to:
- increase a rotational speed of the wheel, to obtain an updated longitudinal slip,
- determine an updated tire force attained when the wheel is operated using the updated longitudinal slip, and
- when the updated tire force and updated longitudinal slip fulfills an iteration condition, replace the second longitudinal slip with the updated longitudinal slip, the iteration condition at least comprises that the updated tire force is greater than the second tire force.

A technical benefit may include improved vehicle dynamics and control of the vehicle. This is since the second longitudinal slip can be iteratively updated such that it is adjusted to be closer to correspond to the maximum achievable tire force.

Optionally in some examples, including in at least one preferred example, the processing circuitry is configured to iterate the updating process until the iteration condition is not fulfilled.

A technical benefit may include improved vehicle dynamics and control of the vehicle. This is since a high tire force is achieved, and adjusting the speed further may not be beneficial for vehicle dynamics and may only cause unnecessary testing for replacing the second longitudinal slip.

Optionally in some examples, including in at least one preferred example, the iteration condition relates to an increase in longitudinal slip and tire force of the updated tire force and updated longitudinal slip as compared to the second longitudinal slip and second tire force, or as compared to an updated tire force and updated longitudinal slip of a previous iteration of the updating process.

A technical benefit may include improved vehicle dynamics and control of the vehicle. This is since if there is no increase in both longitudinal slip and tire force, the slip management process may have reached the maximum tire force, or alternatively, an environment condition or vehicle condition may have changed such that the slip management process may need to be restarted to attain a more efficient longitudinal slip and associated tire force for the wheel.

Optionally in some examples, including in at least one preferred example, the iteration condition relates to at least one of:

- a rate of change of longitudinal slip and tire force between the updated tire force and updated longitudinal slip as compared to the second longitudinal slip and the second tire force, or as compared to an updated tire force and updated longitudinal slip of a previous iteration of the updating process; or
- an angle of a slope as formed between the updated tire force and updated longitudinal slip as compared to the second longitudinal slip and second tire force, or as compared to an updated tire force and updated longitudinal slip of a previous iteration of the updating process.

A technical benefit may include improved vehicle dynamics and control of the vehicle. This is since adjusting a speed to iteratively attempt to find a better tire force and longitudinal slip may affect control of the vehicle and/or the marginal improvement may after some iterations be within an error margin. Hence, it may be more efficient for vehicle dynamics and control of the vehicle to stop when a benefit of iterating is deemed low.

Optionally in some examples, including in at least one preferred example, the iteration condition relates to terminating the updating process when an angle of the slope is associated with a predefined angle.

A technical benefit may include improved vehicle dynamics and control of the vehicle. This is since the iteration may terminate when the slope is indicating low benefits of iterating.

Optionally in some examples, including in at least one preferred example, the updating process comprises:

- increasing the longitudinal slip of the wheel by a predefined amount to obtain the updated longitudinal slip, and
- determining the updated tire force in response to maintaining the updated longitudinal slip for a third time period.

A technical benefit may include improved vehicle dynamics and control of the vehicle. This is since the updating process can be more accurate since the predefined amount to increase the longitudinal slips allows for an iteration in discrete and accurate steps, and wherein maintaining the updated longitudinal slip for the third time period allows for the wheel to reach a steady state, or at least close to a steady state when determining the updated tire force.

Optionally in some examples, including in at least one preferred example, the updating process comprises:

- continuously increasing the longitudinal slip of the wheel to continuously obtain the updated longitudinal slip, and
- continuously determining the updated tire force as a result of the continuously updated longitudinal slip.

A technical benefit may include improved vehicle dynamics and control of the vehicle. This is since the updating process can be more efficient and performed quicker. This is since the process can be performed continuously. While this means that a steady state will never be achieved, the updated tire force may still serve as a sufficiently accurate estimate for a tire force of the updated longitudinal slip.

Optionally in some examples, including in at least one preferred example, the processing circuitry being configured to:

- determine at least one first force applied to at least one first axle of the vehicle during the slip management process, and
- trigger the vehicle to apply to at least one countering force to at least one second axle, for countering the determined at least one first force.

A technical benefit may include improved vehicle dynamics and control of the vehicle. This is since an effect of the slip management process can be mitigated or completely avoided. This means that a user can control the vehicle and may not be disturbed by the increase in speed to adjust longitudinal slip on the wheel since countering forces may be performed on another axle.

Optionally in some examples, including in at least one preferred example, the triggering condition comprises at least one of:

- detecting that a longitudinal slip of the wheel is above a predefined slip threshold,
- detecting that a wheel acceleration of the wheel is above a predefined acceleration threshold.

A technical benefit may include improved vehicle dynamics and control of the vehicle. This is since the first longitudinal slip may more accurately correspond to a fraction of the maximum tire force when the wheel starts spinning, which primarily can be detected by high slip or high wheel acceleration.

Optionally in some examples, including in at least one preferred example, the processing circuitry is further configured to repeat the slip management process in response to at least one of:

- detecting that an acceleration request of the vehicle fulfills a predefined condition,
- detecting a change in a surface travelled by the vehicle.

A technical benefit may include improved vehicle dynamics and control of the vehicle. This is since when there is a change of acceleration request, such as that a pedal of the vehicle is released from a maximum request position, or that the friction of the surface travelled by the vehicle, a function of the tire forces and longitudinal slip may change, and thus, the slip management process may need to be performed again immediately or at a later point in time as the current longitudinal slip may be too high or too low.

According to a second aspect of the disclosure, a vehicle comprising an electric motor or combustion engine configured to at least partly control a motion of a wheel of the vehicle is provided. The vehicle comprises and/or is controlled by a computer system according to the first aspect.

According to a third aspect of the disclosure, a computer-implemented method for, as part of a slip management process, handling a longitudinal slip of a wheel of a vehicle is provided. A motion of the wheel is at least partly controlled by an electric motor or combustion engine of the vehicle.

The method comprises, by a processing circuitry of a computer system, determining a first longitudinal slip by receiving input indicating the first longitudinal slip, or by detecting a longitudinal slip of the wheel when the motion of the wheel fulfills a predefined triggering condition.

The method comprises, by the processing circuitry, determining a first tire force of a tire of the wheel by receiving input indicating the first tire force, or by:

◦ maintaining the first longitudinal slip of the wheel, and determining the first tire force by at least one of:

- determining a steady state tire force, or
- determining a tire force in response to maintaining the first longitudinal slip for a first time period.

The method comprises, by the processing circuitry, with respect to a torque needed to provide the first tire force, controlling a torque applied to the wheel to attain a second tire force. The second tire force is lower than the first tire force with respect to a predefined relationship.

The method comprises, by the processing circuitry, determining a second longitudinal slip associated with the second tire force in response to at least one of: maintaining the second tire force for a second time period, or applying the second tire force as a steady state tire force.

The method comprises, by the processing circuitry, based on the second longitudinal slip, determining a slip or slip interval for controlling the longitudinal slip of the wheel.

Optionally in some examples, including in at least one preferred example, determining the slip or slip interval is based on the first longitudinal slip or a combination of the second longitudinal slip and the first longitudinal slip.

Optionally in some examples, including in at least one preferred example, the method further comprises, as part of an updating process: by the processing circuitry, increasing the second longitudinal slip by:

- increasing a rotational speed of the wheel, to obtain an updated longitudinal slip,
- determining an updated tire force attained when the wheel is operated using the updated longitudinal slip, and
- when the updated tire force and updated longitudinal slip fulfills an iteration condition, replacing the second longitudinal slip with the updated longitudinal slip, the iteration condition at least comprises that the updated tire force is greater than the second tire force.

Optionally in some examples, including in at least one preferred example, the method further comprises:

- by the processing circuitry, determining at least one first force applied to at least one first axle of the vehicle during the slip management process, and
- by the processing circuitry, triggering the vehicle to apply to at least one countering force to at least one second axle, for countering the determined at least one first force.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** is an exemplary vehicle according to an example.
**FIGS. 2a-b** are exemplary diagrams illustrating relationships of tire forces and longitudinal slips.
**FIG. 3** is a flow chart of an exemplary method according to an example.
**FIG. 4** illustrates an example scenario.
**FIG. 5** is another view of **FIG. 1,** according to an example.
**FIG. 6** is a flow chart of an exemplary method according to an example.
**FIG. 7** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

Examples herein may relate to controlling a wheel to have an optimal longitudinal slip meaning that it should have as high tire force as possible, without risking that the wheel starts to spin.

Examples herein may use technology where it is possible to force a current slip of a tire to be a certain value. Such technology can be implemented in various manners, e.g., by increasing rotational speed.

Examples herein may relate to be performed when or after a tire has started losing grip and started spinning, or is about to.

Examples herein may relate to first finding a first tire force for a first longitudinal slip. The first longitudinal slip may be above a threshold, e.g., when the wheel has started to spin, or is about to.

Using said first tire force, a torque may be reduced by a predefined amount to find a second tire force. Due to how slip and tire force behaves, e.g., as when plotted as a curve, it can be known that a corresponding second longitudinal slip of the second tire force may be a sufficiently efficient slip for controlling the wheel. However, to further improve on the second longitudinal slip, the second longitudinal slip may be increased in steps until a slope formed by the second tire force and second longitudinal slip indicates a peak or by said slope being too flat, thereby indicating that there is no or too little change in tire force when increasing the slip.

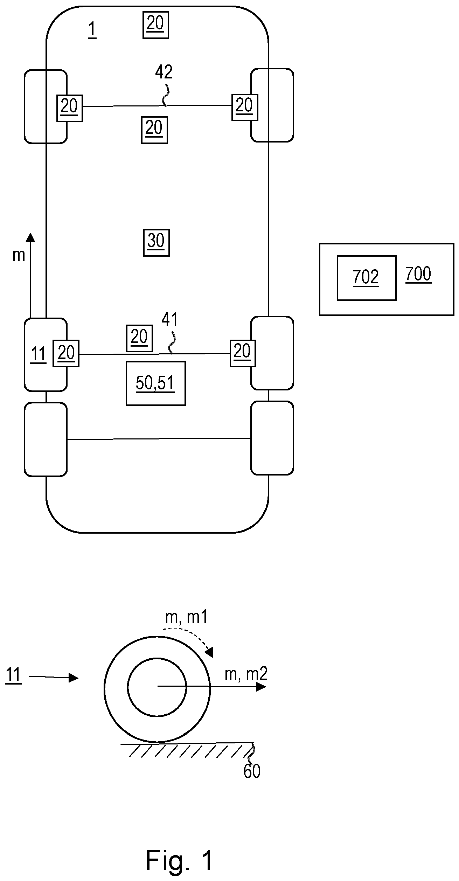

**FIG. 1** illustrates an exemplary **vehicle 1** and a **computer system 700** according to an example.

The vehicle 1 may be any suitable vehicle, e.g., truck, bus, car, heavy-duty vehicle, etc. The vehicle 1 may comprise a **wheel 11.** The wheel 11 comprises a tire. When discussing the wheel 11 of examples herein, the entire wheel 11 and the tire may be considered. In other words, in examples herein, the word wheel may be used to take into account both the metal and rubber part of the wheel 11. When the word tire is used, only the elastic part of the wheel 11 may be referred to.

The wheel 11 may in examples herein be subject to longitudinal slip control, e.g., a slip of the wheel 11 may be directly or indirectly controlled in examples herein, e.g., by controlling rotational motion of the wheel 11, such as by the longitudinal slip of the wheel 11 being controlled by a **slip controller 30** of the vehicle 1. The slip controller 30 may be part of any suitable entity of examples herein, e.g., as part of an Electronic Control Unit (ECU) of the vehicle 1 and/or the computer system 700. When discussing slip of the wheel 11, the slip may be with respect to a tire of the wheel 11. Similarly, all discussions of motion or forces to the wheel 11 in examples herein may be with respect to, or accounting for said tire.

The vehicle 1 comprises an **electric motor 50** or a **combustion engine 51.**

A motion of the wheel 11 is at least partly controlled by the electric motor 50 or the combustion engine 51 of the vehicle 1. The vehicle 1 may also be a hybrid vehicle, i.e., the motion of the wheel 11 may be controlled by both the electric motor 50 and the combustion engine 51. The vehicle 1 may further comprise a brake system which may control the motion of the wheel 11.

An advantage of electric motors compared to internal combustion engines is the possibility to determine torques produced by the electric motor 50 and also measure the speed of the electric motor 50. This is since such features may be part of the electric motor 50 while when using a combustion engine, such aspects may be possible, but may need more complex actuator and/or sensor systems. These properties of the electric motor 50 e.g., may be used in examples herein to determine and/or set at least one of: torque, speed, slip of the wheel 11.

In other words, the examples herein primarily targets electrically driven vehicles. However, it should be noted that the examples are not limited to only being used for electrically driven vehicles.

The vehicle 1 may comprise a set of sensors 20. The set of sensors 20 may comprise any suitable sensor which may be used for obtaining any suitable metrics, measurements, or values, as part of examples herein, e.g., when the electric motor 50 is unable to provide such metrics, measurements, or values.

Examples herein may comprise a first axle 41 and a second axle 42. In FIG. 1 the wheel 11 is coupled with the first axle 41 but any suitable arrangement may be part of examples herein.

The electrical motor 50 or the combustion engine 51, or any other engine, motor, or brake arrangement, may be able to provide to the second axle, forces which counters forces performed with respect to the wheel 11 as part of examples herein.

While only one wheel 11 is illustrated in FIG. 1, it should be understood that the examples herein can be applied to any one or more of all wheels in the vehicle 1.

As part of examples herein, the wheel 11 may be subject to a **motion m.** The motion m may relate to a rotational **motion m1,** and a **motion m2** for how the wheel is travelling horizontally across a **surface 60.** Motion m1 may be an angular velocity of the wheel 11. Motion m2 may be a speed horizontally across the surface 60. In examples herein, a speed of the wheel moving forward as in motion m2, may not be the same as the radius multiplied by angular velocity as in motion m1. This means that there is a longitudinal slip. Such slip increases as a torque applied to the wheel 11 increases. As will be discussed below, when under a steady state, longitudinal slip and tire force of a tire of the wheel 11 may behave according to a partly predefined behavior. The behavior can mostly only be generally known such that a few features of a resulting curve can be known, which features may be exploited as part of examples herein, e.g., such that a high slip is always related to tire force which is within an interval of a maximum tire force. However, while the behavior may be partly predefined, the exact function and curve cannot be known in advance, and hence, examples herein may relate to iteratively testing different slips or tire forces such as to find an optimal or sufficiently efficient longitudinal slip limit.

When discussing tire force in examples herein, a normalized tire force may be referred to. When discussing tire force in examples herein, a tire force is the force that the tire applies to the ground to push the vehicle forward or in the reverse direction.

Examples herein may be performed by a computer system 700 or a processing circuitry 702 therein. The computer system 700 may be comprised in the vehicle 1 or remote to the vehicle 1, e.g., in a server or cloud service, or a first part of the computer system 700 may be comprised in the vehicle 1 and a second part of the computer system 700 may be remote to the vehicle, i.e., the computer system 700 may be a central system or a distributed system.

The computer system 700 or the processing circuitry 702 therein may be able to control or communicate with any suitable aspect of examples herein. For example, the computer system 700 or the processing circuitry 702 therein may be able to control a torque, rotational speed, or slip of the wheel 11, e.g., by controlling the electrical motor 50 and/or the combustion engine 51 and/or brakes of the vehicle 1. The computer system 700 or the processing circuitry 702 therein may be able to obtain any suitable measurements from the set of sensors 20 and/or the electrical motor 50, when applicable.

The computer system 700 or the processing circuitry 702 therein may be able to control a slip of the wheel 11 by using the slip controller 30. The slip controller 30 may be part of the computer system 700.

The computer system 700 may be an ECU of the vehicle 1.

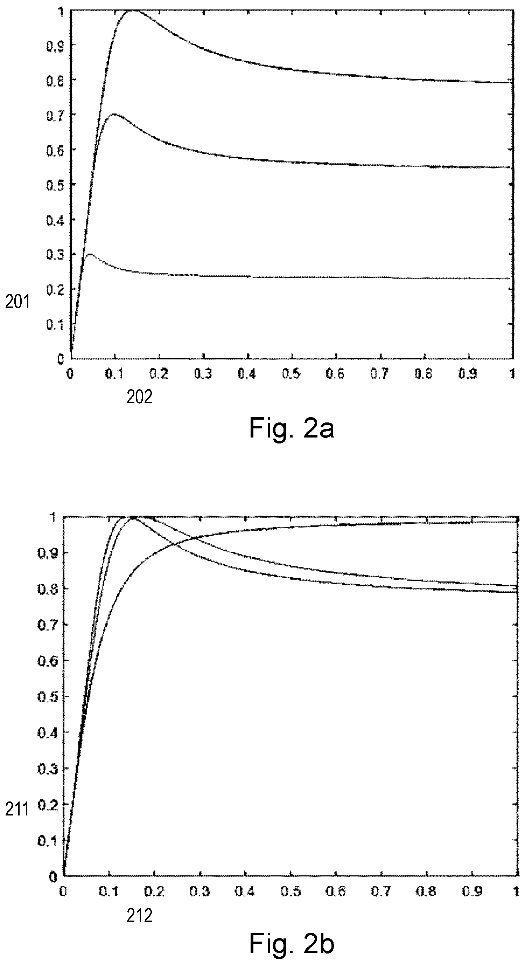

**FIGS. 2a-b** are exemplary diagrams illustrating relationships of tire forces and longitudinal slips as different curves under different conditions, e.g., different frictions, vehicle speeds, tire parameters, vehicle loads, etc. **Y-axes 201, 211** may respectively illustrate a tire force of the wheel 11. **X-axes 202, 212** may respectively illustrate a longitudinal slip of the wheel 11.

In general, for examples herein, a goal may be to find a slip which corresponds to a high tire force but is not to the right of the peak of the curve. This is because a maximum force is achieved at the peak, leading to a fastest acceleration and fastest braking possible. To the right of said peak, the wheel may start to slip and the tire force may go down. An issue is that the peak of the curve may depend on tire properties and surface conditions. Both are hard to estimate and may change even if they are known. Hence, examples herein may dynamically find a suitable efficient longitudinal slip and may need to be performed dynamically and often. It should be noted that the curves of FIGS 2a-b are of a steady state and that there is some lag in reaching these data points each specific slip.

The tire forces of FIGS 2a-b have been normalized which is why they graphs are represented from 0 to1. Tire forces are otherwise usually in the thousands of Newtons. In examples herein, normalized tire forces may be considered but they may also not be normalized.

Normalization may be performed by: Normalized tire force= (Tire force)/(Normal tire force). Normal tire force is the vertical force on that specific tire.

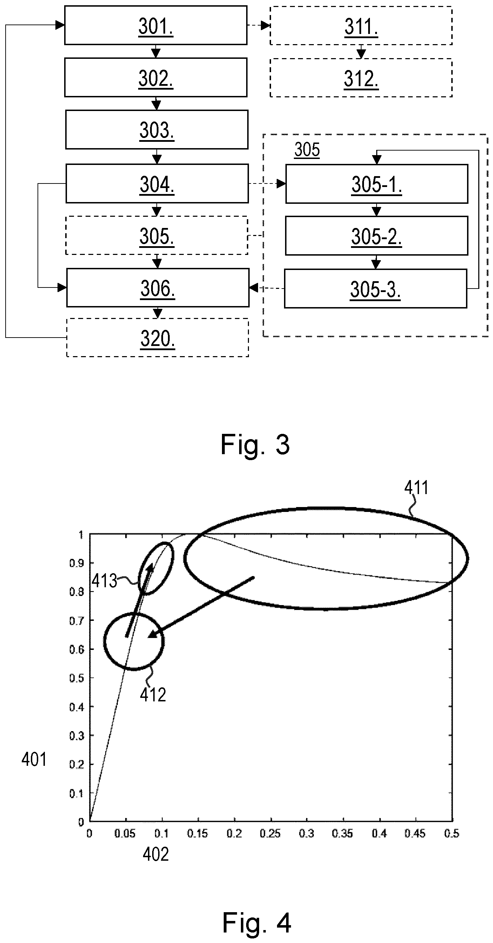

FIG. 3 is a flow chart of an exemplary computer-implemented method for, as part of a slip management process, handling a longitudinal slip of the wheel 11 of the vehicle 1. A motion of the wheel 11 is at least partly controlled by the electric motor 50 or the combustion engine 51 of the vehicle 1. Hybrid solution and/or brake usage may also be considered for controlling the motion of the wheel 11. The method comprises the following actions which may be taken in any suitable order. Optional actions may be indicated by dashed boxes in FIG. 3. The method may be performed by at least one of the computer system 700 and the processing circuitry therein.

**Action 301**

The method comprises determining a first longitudinal slip by receiving input indicating the first longitudinal slip. The input may be transmitted or inputted by a user or by a suitable system associated with the vehicle 1, e.g., a motion control or estimation system of the computer system 700.

Additionally or alternatively the method comprises determining the first longitudinal slip by detecting a longitudinal slip of the wheel 11 when the motion of the wheel 11 fulfills a predefined triggering condition.

The triggering condition comprises at least one of:

- detecting that a longitudinal slip of the wheel 11 is above a predefined slip threshold,
- detecting that a wheel 11 acceleration of the wheel 11 is above a predefined acceleration threshold.

In other words, the first longitudinal slip may be obtained when a rotational motion of the wheel is indicative of that the wheel is spinning or may be about to start to spin. As such, action 301 may be performed in the context where a high slip is detected and/or a slip-condition is detected, and in response, the first longitudinal slip is determined.

**Action 302**

The method comprises, determining a first tire force of a tire of the wheel 11 by receiving input indicating the first tire force. If received by input, action 301 may be performed after or concurrent to action 302. The input may be transmitted or inputted by a user or by a suitable system associated with the vehicle 1, e.g., a motion control or estimation system of the computer system 700.

Additionally or alternatively the method comprises determining the first tire force by maintaining the first longitudinal slip of the wheel 11, and determining the first tire force by at least one of:

- determining a steady state tire force, or
- determining a tire force in response to maintaining the first longitudinal slip for a first time period.

In examples herein, the first tire force may be the tire force produced when the wheel 11 is controlled to have the first longitudinal slip.

The first tire force may be a fraction of a maximum achievable tire force of a tire of the wheel 11. Since it can be known by predefined models of tire forces and slip that a high slip, e.g., higher than a threshold, such as the first longitudinal slip, achieves a fraction of the maximum achievable tire force, it can be concluded that the first tire force is a fraction of a maximum achievable tire force.

In a curve representing tire force and slip, the pair of the first longitudinal slip and the first tire force may, due to their known high values, represent an upper limit of which tire force / slip ratio a motion of the wheel 11 should have when controlling longitudinal slip for the wheel 11.

**Action 303**

The method comprises, with respect to a torque needed to provide the first tire force, controlling a torque applied to the wheel 11 to attain a second tire force, the second tire force being lower than the first tire force with respect to a predefined relationship.

In other words, if the electric motor 50 controls the wheel 11, the electric motor 50 may be in a torque controlling mode.

The predefined relationship for defining the second tire force with respect to the first tire force may be tuned in a predefined manner, e.g., with respect to a known behavior of a tire slip / tire curve, such that the second tire force will be sufficiently high for a relatively low slip.

The predefined relationship may be tuned such that with respect to a tire slip / tire curve, while it may not be possible to accurately pinpoint the peak itself, the second tire force, and its corresponding longitudinal slip, will be on a high rise part of the slope, to the left of the peak of the slope.

The predefined relationship can be determined due to a predictive nature of tire forces and slip. For example, a second tire force of 75% of the first tire force may still yield a high tire force, but correspond to a significantly lower slip, thereby improving vehicle dynamics and control of the vehicle.

The predefined relationship may relate to a fraction of the torque provided to maintain the first tire force, or may be a fraction of the tire force. When using the electric motor 50, controlling or obtaining information of tire forces and torque to achieve such tire forces may be conventional. When using the combustion engine 51, a number of sensors and actuators may be needed to accurately measure and estimate torque and tire forces.

**Action 304**

The method comprises, determining a second longitudinal slip associated with the second tire force in response to at least one of: maintaining the second tire force for a second time period, or applying the second tire force as a steady state tire force.

In other words, the second longitudinal slip is the slip corresponding to the second tire force, typically when in a steady state or at least sufficiently close to a steady state.

Since the first tire force is known to be a fraction of maximum achievable tire force of the wheel 11, and since the predefined relationship can be tuned accurately with respect to how tire forces and longitudinal slip behaves, the second tire force and the second longitudinal slip may, on a tire force / slip curve, be a point on a high rise portion of the curve, close to the peak. Hence, the second longitudinal slip can be used for controlling the slip of the vehicle 1 which will yield efficient vehicle dynamics and control.

**Action 305**

The method may further comprise, as part of an updating process, increasing the second longitudinal slip.

As discussed above, due to the tuning of the predefined relationship, on a tire force / slip curve, the pair of the second tire force and the second longitudinal slip will be on a high rising portion of the curve, to the left of the peak, i.e., where increased slip will eventually reach the peak of such a curve. Hence, the updating process may increase the second longitudinal slip to find the peak of such a curve, or at least to approach closer to such a peak.

The updating process may be an iterative updating process which may be performed one, two, three, or more times, e.g., by comprising the following sub-actions 305-1, 305-2, and 305-3, in any suitable order.

Sub-action 305-1

The updating process may comprise increasing a rotational speed of the wheel 11, to obtain an updated longitudinal slip.

In some examples, the updating process comprises increasing the longitudinal slip of the wheel 11 by a predefined amount to obtain the updated longitudinal slip.

In some examples, the updating process comprises, continuously increasing the longitudinal slip of the wheel 11 to continuously obtain the updated longitudinal slip.

In other words, if the electric motor 50 controls the wheel 11, the electric motor 50 may be in a speed controlling mode.

Sub-action 305-2

The updating process may comprise determining an updated tire force attained when the wheel 11 is operated using the updated longitudinal slip.

In some examples, the updating process comprises determining the updated tire force in response to maintaining the updated longitudinal slip for a third time period.

In some examples, the updating process comprises continuously determining the updated tire force as a result of the continuously updated longitudinal slip.

In other words, the updated tire force may be determined with respect to the updated longitudinal slip when reaching a steady state, or sufficiently close to reaching a steady state.

When continuously increasing longitudinal slip and determining the corresponding updated tire force, the increase of longitudinal slip may be at a rate below threshold such that the determination is sufficiently accurate. Such a rate may be predefined and may be tuned for the vehicle 1 and/or the application of the vehicle 1.

Sub-action 305-3

The updating process may comprise, when the updated tire force and updated longitudinal slip fulfills an iteration condition, replacing the second longitudinal slip with the updated longitudinal slip.

In other words, when the updating process determines a pair of updated tire force and longitudinal slip that is closer to a peak of a tire force / slip curve than the pair of second tire force and second longitudinal slip, the updated longitudinal slip may replace the second longitudinal slip as a target for controlling a longitudinal slip of the wheel 11.

The iteration condition at least comprises that the updated tire force is greater than the second tire force. However, further conditions may apply. For example, the ratio tire force / longitudinal slip may also need to be greater for the pair of updated tire force and longitudinal slip compared to the pair of second tire force and longitudinal slip.

In some examples, the method comprises iterating the updating process until the iteration condition is not fulfilled. This is since there is no advantage in performing speed control of the wheel 11 if there is no found benefit in updating the longitudinal slip. Hence, terminating the iteration may improve vehicle dynamics or at least reduce energy consumption.

In some examples, the iteration condition relates to an increase in longitudinal slip and tire force of the updated tire force and updated longitudinal slip as compared to the second longitudinal slip and second tire force, or as compared to an updated tire force and updated longitudinal slip of a previous iteration of the updating process. In other words, there may need to be some increase in tire force and slip compared to previous iterations or compared to a starting point of the updating process for the iteration to continue.

In some examples, the iteration condition relates to at least one of:

- a rate of change of longitudinal slip and tire force between the updated tire force and updated longitudinal slip as compared to the second longitudinal slip and the second tire force, or as compared to an updated tire force and updated longitudinal slip of a previous iteration of the updating process; or
- an angle of a slope as formed between the updated tire force and updated longitudinal slip as compared to the second longitudinal slip and second tire force, or as compared to an updated tire force and updated longitudinal slip of a previous iteration of the updating process.

The slope may be seen as a representation of the rate of change. In other words, if updating the tire force and longitudinal slip results in a small change, e.g., smaller than a threshold, then the iteration may terminate since a benefit in iterating may be lower than an error margin and/or such a benefit may be less significant than energy consumption for performing the iteration.

In some examples, the iteration condition relates to terminating the updating process when an angle of the slope is associated with a predefined angle, e.g., 45 degrees may indicate that a rate of change will start to significantly slow down and the pair of tire force and longitudinal slip is approaching the peak of a tire force / slip curve.

The iteration condition can be tuned with respect to the vehicle 1 or the application of the vehicle 1.

**Action 306**

The method comprises by the processing circuitry 702, based on the second longitudinal slip, determining a slip or slip interval for controlling the longitudinal slip of the wheel 11.

In some examples, determining the slip or slip interval for controlling the longitudinal slip of the wheel 11 may comprise determining the slip or slip interval further based on the first longitudinal slip.

In some examples, determining the slip or slip interval for controlling the longitudinal slip of the wheel 11 may comprise determining the slip or slip interval by determining the slip or slip interval based on the second longitudinal slip and the first longitudinal slip.

In other words, determining the slip or slip interval for controlling the longitudinal slip of the wheel 11 may comprise determining the slip or slip interval is based on the first longitudinal slip or a combination of the second longitudinal slip and the first longitudinal slip.

**Action 311**

The method may comprise determining at least one first force applied to at least one first axle of the vehicle 1, such as the first axle 41, during the slip management process, e.g., as part of any one or more actions 301-305. The at least one first force may be determined by sensor input from the set of sensors 20 and/or by the use of a predefined model.

**Action 312**

The method may comprise triggering the vehicle 1 to apply to at least one countering force to at least one second axle, such as the second axle 42, for countering the determined at least one first force, e.g., as in action 311.
Applying the at least one countering force may involve using brakes or motors/engines to neutralize any forces performed by actions 301-305, e.g., when updating slip/speed/torque.

**Action 320**

The method may further comprises repeating the slip management process, e.g., actions 301-306, in response to at least one of:

- detecting that an acceleration request of the vehicle 1 fulfills a predefined condition,
- detecting a change in a surface travelled by the vehicle 1.

In particular, the slip management process may be repeated if it can be detected that an acceleration request first falls below a maximum acceleration request by a predefined margin, and again, e.g., then after a set period of time, is increased to be within a predefined margin of the maximum acceleration request.
In other words, examples herein, e.g., actions 301-306, may in particular be applied when a accelerator pedal of the vehicle 1 is pressed to a max position, or at least close to a max position, thereby requesting a maximum or close to maximum acceleration. When the accelerator pedal is released, slip will be reduced naturally. When the accelerator pedal is again pressed to the max position, or close to the max position, actions 301-306 may need to be re-iterated since a new condition of the vehicle 1 may be present, which means that the tire force / slip curve may look different.
The repetition may further be performed by any other suitable manner, e.g., periodically or by other detected events.
**FIG. 4** illustrates an example scenario of examples herein with three different stages. These three stages will be described with respect to a tire force / slip curve as seen in FIG. 4. The curve is defined by an **Y-axis 401** representing tire force of the wheel 11, and an **X-axis 402** representing a longitudinal slip of the wheel 11. The tire force may be normalized tire force as discussed with respect to FIGS 2a-b..

**Stage 1.**

A tire slip e.g., the first longitudinal slip, may be held at a constant value once spinning is determined, and until steady state is reached. The electric motor 50 may be is used to determine a tire force value at this instant, e.g., the first tire force, which tire force is close to the maximum tire force possible.
Stage 1 may correspond to and/or may be combined with actions 301-302.

**Stage 2.**

Torque control, e.g., by the electric motor 50, may be used to cut requested torque to a certain percentage, e.g., possibly 75% of steady state torque of Stage 1 until steady state for this torque is reached, e.g., corresponding to a torque for providing the second tire force.
Stage 2 may correspond to and/or may be combined with actions 303. 304.

**Stage 3.**

Slip control may be used, e.g., by the electric motor 50, while increasing reference slip in steps until slope is below a threshold, e.g., corresponding to the updating process.
Stage 3 may correspond to and/or may be combined with action 305.
The details of the three stages presented above is further discussed in more detail below.
Stage 1 may relate to a determination of approximate maximum force, i.e., the first tire force.
When forces higher than an amount available from the tire of wheel 11 are requested, a **first circled region 411** may be reached. When the tire force and longitudinal slip of the wheel is in this region, it may not directly imply an optimal slip, i.e., the peak of the curve. However, it may partly indicate a maximum achievable tire force.
Hence, at stage 1, the longitudinal slip may be held at a constant value once spinning is determined, e.g., by detecting a longitudinal slip or wheel acceleration above a threshold, until steady state is reached. The steady state may be assumed to be reached after a set time period or when associated values or parameters stabilize. The electric motor 50 may be used to determine a tire force value at this instant. The tire force is close to the maximum tire force possible. In other words, the first longitudinal slip and the first tire force may be determined.

At this stage the electric motor 50 may be in speed control mode.

Stage 2 may relate to a determination of the second longitudinal slip, i.e., an estimate of an optimal slip. After the approximate maximum tire force is determined, e.g., as in stage 1, producing a percentage such as 75% of that force results in a behavior within the second circled region 412. The percentage may need to be tuned for the vehicle or vehicle application. As discussed in actions above, any other predefined relationship may also apply. As seen in FIG. 4, the **second circled region 412** may relate to a fast rising part of the tire force / slip curve, i.e., with a high tire force and relatively low slip thereby achieving efficient vehicle dynamics and vehicle control.

In stage 2, the electric motor 50 may be driven in a torque control mode to reach the circled region 412, i.e., corresponding to the second tire force. After the tire dynamics reaches a steady state, the slip value is stored, i.e., the second longitudinal slip. The slip value may provide a sufficiently efficient target for slip control and may indicate a slip value close to a limit of the tire of the wheel 11.

Stage 3 may relate to determining or obtaining a more accurate slip, closer to an optimal slip of the tire force / slip curve such that the tire force and longitudinal slip reaches the **third circled region 413,** e.g., by using the updated tire force and updated longitudinal slip in actions above. With respect to stage 2, the longitudinal slip may be increased slowly, e.g., by the electric motor 50, until a gain in tire force becomes small, e.g., below a threshold. Such an approach may result in reaching higher tire forces while not going into the high spin region as indicated by the first circled region 411.

At this stage the electric motor 50 may again be in speed control mode. Therefore, the longitudinal slip of the tire of the wheel 11 may be increased at the desired speed. Two possibilities of increasing tire slip may be: increase in steps, i.e., discrete increases, or continuous increase.

Increase in steps.

For example, increase the second longitudinal slip with a predefined amount, e.g., corresponding to a magnitude of 0.01 of the slip, or any other suitable amount and wait until a steady state is reached. A slope calculated from the starting point before the increase and final point after the increase may be used to determine if one is close to the peak of the tire force-slip curve. Increase the slip again by a predefined amount, e.g., 0.01 in magnitude, and check the slope for a corresponding change. It may be expected that an angle of the slope should decrease as it approaches gets closer to the peak of the curve. A possible stopping point is to stop increasing once one has reached a slope of 45 degrees. The slope calculation may relate to a function f = arctan((Tire force after step - Tire force before step)/(Slip after step - Slip before step)).

A stopping point of 45 degrees may be a sufficiently efficient target when the tire force is normalized as in FIG. 4. If the tire forces are in Newtons, the change may instead be much different e.g., atan((20000N-19000N)/0.01)=89.95 degrees. In other words, the angle for stopping need to consider the units for measuring and/or if measurements are normalized etc.

The tire force may be normalized with the normal tire force, i.e., vertical tire force, so that 45 degrees often is a suitable stopping point. For example:

- Normalized tire force= tire force/Normal tire force
- f = arctan((Normalized tire force after step - Normalized tire force before step)/(Slip after step - Slip before step))

Continuous increase of slip.

The slip may, be increased slowly, e.g., by the electric motor 50 at a predefined rate, and may continuously use the slope process above as in the discrete increase for stopping the continuous increase. This will result in a continuously decreasing slope.

When the stopping point, e.g., a predefined slope angle, is reached the optimal slip has been determined.

Note: with respect to stage 1, the reason for not moving left directly from the first circled region 411 is that the slope is quite small in this region making it difficult to determine a change in slope. Hence, the second region 412 may be a sufficiently efficient target slip and tire force, and may serve as a starting point for reaching the more optimal slip in region 413.

Further extensions or variations of examples herein

In examples herein the torque and/or speed of an axle may change to determine longitudinal slip. This process may be disturbing for or unwanted by a driver or user of the vehicle 1 since there may be an associated acceleration of the vehicle 1 during this process.

Methods of countering this may comprise any or both of the following and may be combined with actions 211-212 above:

- Countering method 1. Assuming that one or more axles, e.g., axle 41, are being controlled as in examples herein above by the electric motor 50, and also assuming that there are other axles independent of this electric motor, e.g., axle 42, the other axles can be used to counter the unwanted acceleration caused by the electric motor 51 by using mechanical brakes.
- Countering method 2. Using the same assumption as countering method 1, but making another assumption that the other axle, e.g., axle 42, is controlled with another electric motor, the unwanted accelerations can be countered by this electric motor.

With respect to stage 1, if another method may be used to determine the maximum tire force instead of Stage 1, stage 1 may be skipped and one can move on to Stages 2 and 3, e.g., by receiving the information by input as in actions 301-302.

Stage 3 may not be necessary since stage 2 may find a sufficiently efficient slip to control the wheel 11.

In examples herein difference may occur depending on if the vehicle 1 is controlled by the combustion engine 51 or the electric motor 50.

For electric vehicles the electric motor 50 may provide the motor torque and speed easily whereas an internal combustion engine 51 may not give exact torque values and sensors, heuristics, or models may be used (may also be used for the electric motor 50 if needed).

In other words, determining tire force or longitudinal slip in examples herein may be performed with respect to predefined models or heuristics that can use measurements or values of some or all of the following:

- Actuator torques. The actuators can include all or some of the following: electric motor, internal combustion engine and brakes.
- Wheel speed. From wheel speed sensors
- Vehicle speed.
- Vehicle acceleration from IMU or other sensor,
- Road inclination
- Surface conditions from camera, map or cloud
- Axle load or vertical load on each tire.
- Drive-train parameters such as gear ratios, tire radius etc.

The above is for estimation. Sensors may further be available to directly provide tire forces in examples herein. Such sensors may however be unsuitable for production and may be only be used on test vehicles.

Some examples herein may specifically improve performance of the combustion engine 51 when going from Stage 1 to Stage 2. For the electric motor 50, it may be relatively easy to go from Stage 1 to Stage 2 and can be performed in any suitable manner. For the combustion engine 51 the transition between stages may also be possible. However, if during Stage 1, the tire of the wheel 11 is spinning fast and the surface is slippery, it may take a set time period to move on to Stage 2. Hence, the torque control during Stage 2 may still be the same with the combustion engine 51 but to speed this control process up, brakes of the vehicle 1 may be used to further control the motion of the wheel 11. In other words, while also possible for the electrical motor 50, for the combustion engine 51, in Stage 2 such as at an initial part of Stage 2, braking with a brake system may result in a faster transition to the state of Stage 2.

While using the brakes are more necessary for the combination with the combustion engine 51, any combination of electric motor 50, internal combustion engine 51, and brakes can be used in any stage to speed or torque control the wheel 11.

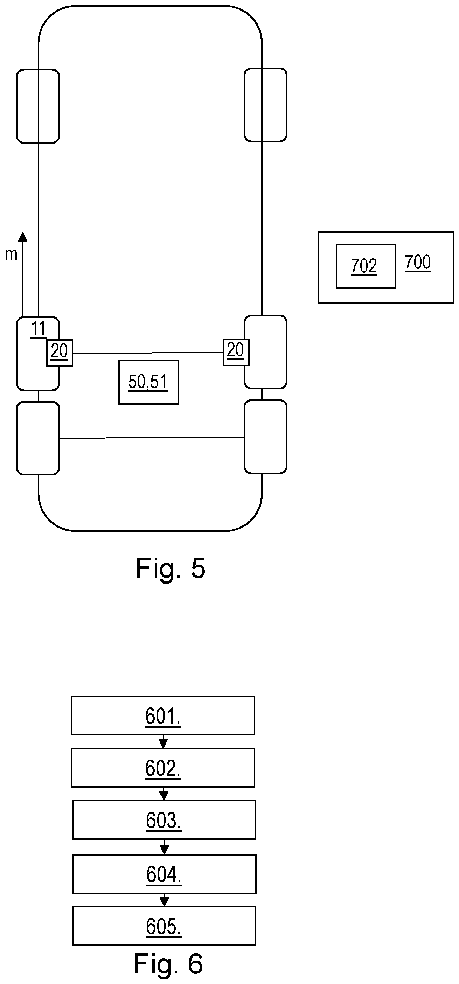

FIG. 5 is another view of FIG. 1, according to an example.

The computer system 700 comprising the processing circuitry 702 configured to, as part of the slip management process, handle a longitudinal slip of the wheel 11 of the vehicle 1 is provided. A motion of the wheel 11 is at least partly controlled by the electric motor 50 or the combustion engine 51 of the vehicle 1.

The processing circuitry 702 is configured to determine a first longitudinal slip by receiving input indicating the first longitudinal slip. Alternatively, the processing circuitry 702 is configured to determine the first longitudinal slip by detecting a longitudinal slip of the wheel 11 when the motion of the wheel 11 fulfills a predefined triggering condition.

The processing circuitry 702 is configured to determine a first tire force of a tire of the wheel 11 by receiving input indicating the first tire force. Alternatively, the processing circuitry 702 is configured to determine the first tire force by being configured to maintain the first longitudinal slip of the wheel 11, and to determine the first tire force by at least one of:

- determining a steady state tire force, or
- determining a tire force in response to maintaining the first longitudinal slip for a first time period.

The processing circuitry 702 is configured to, with respect to a torque needed to provide the first tire force, control a torque applied to the wheel 11 to attain a second tire force. The second tire force is lower than the first tire force with respect to a predefined relationship.

The processing circuitry 702 is configured to, determine a second longitudinal slip associated with the second tire force in response to at least one of:

- maintaining the second tire force for a second time period, or
- applying the second tire force as a steady state tire force.

The processing circuitry 702 is configured to, based on the second longitudinal slip, determine a slip or slip interval for controlling the longitudinal slip of the wheel 11.

**FIG. 6** is a flow chart of an exemplary computer-implemented method for, as part of the slip management process, handling a longitudinal slip of the wheel 11 of the vehicle 1. The motion of the wheel 11 is at least partly controlled by the electric motor 50 or the combustion engine 51 of the vehicle 1.

The below method actions 601-605 may be combined with any examples herein in any suitable manner.

Action 601

The method comprises, by the processing circuitry 702 of the computer system 700, determining a first longitudinal slip by receiving input indicating the first longitudinal slip, or by detecting a longitudinal slip of the wheel 11 when the motion of the wheel 11 fulfills a predefined triggering condition.

Action 602

The method comprises, by the processing circuitry 702, determining a first tire force of a tire of the wheel 11 by receiving input indicating the first tire force, or by: maintaining the first longitudinal slip of the wheel 11, and determining the first tire force by at least one of:

- determining a steady state tire force, or
- determining a tire force in response to maintaining the first longitudinal slip for a first time period.

Action 603

The method comprises by the processing circuitry 702, with respect to a torque needed to provide the first tire force, controlling a torque applied to the wheel 11 to attain a second tire force. The second tire force is lower than the first tire force with respect to a predefined relationship.

Action 604

The method comprises by the processing circuitry 702, determining a second longitudinal slip associated with the second tire force in response to at least one of: maintaining the second tire force for a second time period, or applying the second tire force as a steady state tire force.

Action 605

The method comprises by the processing circuitry 702, based on the second longitudinal slip, determining a slip or slip interval for controlling the longitudinal slip of the wheel 11.

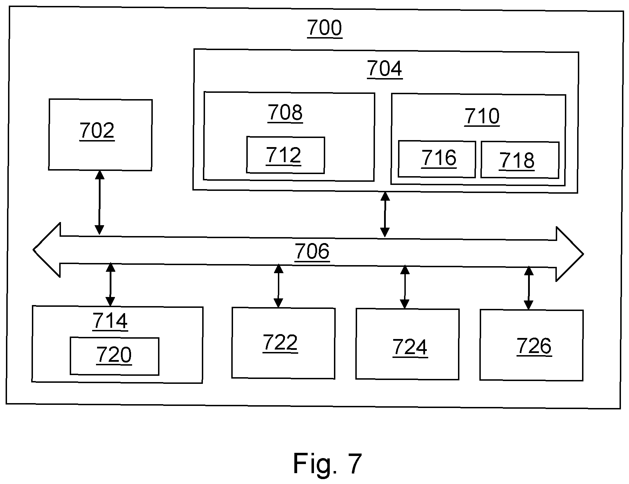

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706**. The computer system **700** may include at least one computing device having the processing circuitry **702**. The system bus **706** provides an interface for system components including, but not limited to, the memory **704** and the processing circuitry **702**. The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702**. A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702**. In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702**. The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of **Examples 1-20.** The below Examples 1-20 may be combined with any of the examples above, or with the subject matter of the attached claims in any suitable manner.

Example 1. A computer system (700) comprising processing circuitry (702)
configured to, as part of a slip management process, handle a longitudinal slip of a wheel (11) of a vehicle (1), wherein a motion of the wheel (11) being at least partly controlled by an electric motor (50) or combustion engine (51) of the vehicle (1), the processing circuitry (702) being configured to:

- determine a first longitudinal slip by receiving input indicating the first longitudinal slip, or by detecting a longitudinal slip of the wheel (11) when the motion of the wheel (11) fulfills a predefined triggering condition,
- determine a first tire force of a tire of the wheel (11) by receiving input indicating the first tire, or by being configured to:

  ∘ maintain the first longitudinal slip of the wheel (11), and
  ∘ determine the first tire force by at least one of:

    ▪ determining a steady state tire force, or
    ▪ determining a tire force in response to maintaining the first longitudinal slip for a first time period;

- with respect to a torque needed to provide the first tire force, control a torque applied to the wheel (11) to attain a second tire force, the second tire force being lower than the first tire force with respect to a predefined relationship, and,
- determine a second longitudinal slip associated with the second tire force in response to at least one of: maintaining the second tire force for a second time period, or applying the second tire force as a steady state tire force,
- based on the second longitudinal slip, determine a slip or slip interval for controlling the longitudinal slip of the wheel (11).

Example 2. The computer system (700) of Example 1, wherein the processing circuitry (702) is configured to determine the slip or slip interval further based on the first longitudinal slip.

Example 3. The computer system (700) of Example 2, wherein the processing circuitry (702) is configured to determine the slip or slip interval by determining the slip or slip interval based on the second longitudinal slip and the first longitudinal slip.

Example 4. The computer system (700) of any of Examples 1-3, wherein the processing circuitry (702) is configured to:

- as part of an updating process: increase the second longitudinal slip by being configured to:

  ∘ increase a rotational speed of the wheel (11), to obtain an updated longitudinal slip,
  ∘ determine an updated tire force attained when the wheel (11) is operated using the updated longitudinal slip, and
  ∘ when the updated tire force and updated longitudinal slip fulfills an iteration condition, replace the second longitudinal slip with the updated longitudinal slip, the iteration condition at least comprises that the updated tire force is greater than the second tire force.

Example 5. The computer system (700) of Example 4, wherein the processing circuitry (702) is configured to iterate the updating process until the iteration condition is not fulfilled.

Example 6. The computer system (700) of Example 5 wherein the iteration condition relates to an increase in longitudinal slip and tire force of the updated tire force and updated longitudinal slip as compared to the second longitudinal slip and second tire force, or as compared to an updated tire force and updated longitudinal slip of a previous iteration of the updating process.

Example 7. The computer system (700) of Example 5 or 6 wherein the iteration condition relates to at least one of:

  ∘ a rate of change of longitudinal slip and tire force between the updated tire force and updated longitudinal slip as compared to the second longitudinal slip and the second tire force, or as compared to an updated tire force and updated longitudinal slip of a previous iteration of the updating process; or
- an angle of a slope as formed between the updated tire force and updated longitudinal slip as compared to the second longitudinal slip and second tire force, or as compared to an updated tire force and updated longitudinal slip of a previous iteration of the updating process.

Example 8. The computer system (700) of Example 7 wherein the iteration condition relates to terminating the updating process when an angle of the slope is associated with a predefined angle.

Example 9. The computer system (700) of any of Examples 4-8 wherein the updating process comprises:

- increasing the longitudinal slip of the wheel (11) by a predefined amount to obtain the updated longitudinal slip, and
- determining the updated tire force in response to maintaining the updated longitudinal

slip for a third time period.

Example 10. The computer system (700) of any of Examples 4-8 wherein the updating process comprises:

- continuously increasing the longitudinal slip of the wheel (11) to continuously obtain the updated longitudinal slip, and
- continuously determining the updated tire force as a result of the continuously

updated longitudinal slip.

Example 11. The computer system (700) of any of Examples 1-10, further configured to:

- determine at least one first force applied to at least one first axle of the vehicle (1) during the slip management process, and
- trigger the vehicle (1) to apply to at least one countering force to at least one second

axle, for countering the determined at least one first force.

Example 12. The computer system (700) of any of Examples 1-11, wherein the triggering condition comprises at least one of:

- detecting that a longitudinal slip of the wheel (11) is above a predefined slip threshold,
- detecting that a wheel (11) acceleration of the wheel (11) is above a predefined

acceleration threshold.

Example 13. The computer system (700) of any of Examples 1-12, wherein the processing circuitry is further configured to repeat the slip management process in response to at least one of:

- detecting that an acceleration request of the vehicle (1) fulfills a predefined condition,
- detecting a change in a surface travelled by the vehicle (1).

Example 14. A vehicle comprising an electric motor (50) or combustion engine (51) configured to at least partly control a motion of a wheel (11) of the vehicle (1), wherein the vehicle comprises and/or is controlled by a computer system (700) according to any of Examples 1-13.

Example 15. A computer-implemented method for, as part of a slip management process, handling a longitudinal slip of a wheel (11) of a vehicle (1), wherein a motion of the wheel (11) being at least partly controlled by an electric motor (50) or combustion engine (51) of the vehicle (1), the method comprising, comprising:

- by a processing circuitry (702) of a computer system (700), determining (301, 601) a first longitudinal slip by receiving input indicating the first longitudinal slip, or by detecting a longitudinal slip of the wheel (11) when the motion of the wheel (11) fulfills a predefined triggering condition,
- by the processing circuitry (702), determining (302, 602) a first tire force of a tire of the wheel (11) by receiving input indicating the first tire force, or by:

  - maintaining the first longitudinal slip of the wheel (11), and
  - determining the first tire force by at least one of:

    - determining a steady state tire force, or
    - determining a tire force in response to maintaining the first longitudinal slip for a first time period;

- by the processing circuitry (702), with respect to a torque needed to provide the first tire force, controlling (303, 603) a torque applied to the wheel (11) to attain a second tire force, the second tire force being lower than the first tire force with respect to a predefined relationship, and,
- by the processing circuitry (702), determining (304, 604) a second longitudinal slip associated with the second tire force in response to at least one of: maintaining the second tire force for a second time period, or applying the second tire force as a steady state tire force,
- by the processing circuitry (702), based on the second longitudinal slip, determining (306, 605) a slip or slip interval for controlling the longitudinal slip of the wheel (11).

Example 16. The method according to Example 15, wherein determining (306) the slip or slip interval is based on the first longitudinal slip or a combination of the second longitudinal slip and the first longitudinal slip.

Example 17. The method according to any of Examples 15-16, further comprising, as part of an updating process: by the processing circuitry (702), increasing (305) the second longitudinal slip by:

○ increasing (305-1) a rotational speed of the wheel (11), to obtain an updated longitudinal slip,
○ determining (305-2) an updated tire force attained when the wheel (11) is operated using the updated longitudinal slip, and
○ when the updated tire force and updated longitudinal slip fulfills an iteration condition, replacing (305-3) the second longitudinal slip with the updated longitudinal slip, the iteration condition at least comprises that the updated tire force is greater than the second tire force.

Example 18. The method according to any of Examples 15-17, further comprising:

- by the processing circuitry (702), determining (311) at least one first force applied to at least one first axle of the vehicle (1) during the slip management process, and by the processing circuitry (702), triggering (312) the vehicle (1) to apply to at least one countering force to at least one second axle, for countering the determined at least one first force.

Example 19. A computer program product comprising program code for performing, when executed by the processing circuitry (702), the method of any of Examples 15-18.

Example 20. A non-transitory computer-readable storage medium comprising instructions, which when executed by the processing circuitry (702), cause the processing circuitry (702) to perform the method of any of Examples 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

Below follows a list of terminology and corresponding explanation as used in any of the above-mentioned examples.

| Term | Explanation |
|---|---|
| First tire force | The first tire force is due to known tire force models expected to be close to a maximum tire force achievable to the wheel 11. The first tire force may be obtained when the wheel 11 operates using a high longitudinal slip, e.g., above a set threshold. The first tire force may be the tire force achieved when the wheel 11 is applied the first longitudinal slip. |
| Second tire force | The second tire force is a set fraction of the first tire force, or is a tire force produced by a second torque, which second torque is a set fraction of a first torque used to produce the first tire force. |
| First longitudinal slip | The slip used for determining the first tire force. May be above a set threshold or may be obtained when measuring that a current slip is above a threshold. In some examples, the first longitudinal slip may only be achieved when an accelerator request is maximum, i.e., an accelerator pedal is pressed to the max position. |
| Second longitudinal slip | A slip corresponding to the second tire force. Lower than the first longitudinal slip. |
| Updated longitudinal slip | A slip updated with respect to increasing a speed when using the second longitudinal slip and which may replace the second longitudinal slip if deemed to have an increase in tire force and/or is closer to the peak of a tire force / slip curve. |
| Updated tire force | A tire force corresponding to the updated longitudinal slip. |
| Steady state | When a tire force and longitudinal slip stabilizes, e.g., such that changes are kept below a threshold for a set time. |
| Tire force / slip curve | A curve may represent a tire force and longitudinal slip. A curve behavior may be partly predefined, such that it can be known that a slip above a set threshold may achieve a tire force where the curve has started to flatten, which is a fraction of the maximum achievable tire force. Due to changes in conditions for the wheel 11, an exact slope behavior can however only be determined dynamically. |
| Tire force / slip curve - upper bound | The pair of the first longitudinal slip and the first tire force may represent an upper bound for a wheel behavior when controlling a slip of examples herein. |
| Tire force / slip curve - second longitudinal slip as a slip target. | The pair of the second longitudinal slip and the second tire force may represent a target for controlling the longitudinal slip since due to the predefined relationship and definition of the first tire force, the second longitudinal slip and tire force is somewhere on a quick rise of the slope, approaching the peak, thereby representing an efficient target for controlling the longitudinal slip. |
| Tire force / slip curve - second longitudinal slip as a lower bound | While it may not be possible to exactly determine the peak of the tire force / slip curve by a predefined relationship to the first tire force, the pair of the second longitudinal slip and the second tire force may be known to be somewhere on a quick rise of the slope, approaching the peak, and may thereby form a lower bound for a wheel behavior when controlling a slip of examples herein. Such a lower bound may be iteratively increased to attempt to find values closer to said peak (see the updated longitudinal slip and tire force as discussed above). |
| Longitudinal slip of the wheel 11. | Three main options for calculation of longitudinal slip may be available as part of examples herein. $$slip1 = \frac{m1 \cdot R - m2}{|m1 \cdot R|}$$ |

(continued)

| Term | Explanation |
|------|-------------|
| | $$slip2 = \frac{m1 \cdot R - m2}{|m2|}$$ $$slip3 = m1 \cdot R - m2$$ $slip_{1,2,3}$: Slip of wheel 11 in a longitudinal direction.<br>$m1$: Angular velocity of wheel<br>$R$: Effective radius of wheel<br>$m2$: Longitudinal velocity of center of<br>wheel |

**Claims**

1. A computer system (700) comprising processing circuitry (702) configured to, as part of a slip management process, handle a longitudinal slip of a wheel (11) of a vehicle (1), wherein a motion of the wheel (11) being at least partly controlled by an electric motor (50) or combustion engine (51) of the vehicle (1), the processing circuitry (702) being configured to:

   - determine a first longitudinal slip by receiving input indicating the first longitudinal slip, or by detecting a longitudinal slip of the wheel (11) when the motion of the wheel (11) fulfills a predefined triggering condition,
   - determine a first tire force of a tire of the wheel (11) by receiving input indicating the first tire force, or by being configured to:

      ∘ maintain the first longitudinal slip of the wheel (11), and
      ∘ determine the first tire force by at least one of:

         ▪ determining a steady state tire force, or
         ▪ determining a tire force in response to maintaining the first longitudinal slip for a first time period;

   - with respect to a torque needed to provide the first tire force, control a torque applied to the wheel (11) to attain a second tire force, the second tire force being lower than the first tire force with respect to a predefined relationship, and,
   - determine a second longitudinal slip associated with the second tire force in response to at least one of: maintaining the second tire force for a second time period, or applying the second tire force as a steady state tire force,
   - based on the second longitudinal slip, determine a slip or slip interval for controlling the longitudinal slip of the wheel (11).

2. The computer system (700) of claim 1, wherein the processing circuitry (702) is configured to determine the slip or slip interval further based on the first longitudinal slip.

3. The computer system (700) of claim 2, wherein the processing circuitry (702) is configured to determine the slip or slip interval by determining the slip or slip interval based on the second longitudinal slip and the first longitudinal slip.

4. The computer system (700) of any of claims 1-3, wherein the processing circuitry (702) is configured to:

   - as part of an updating process: increase the second longitudinal slip by being configured to:

      ∘ increase a rotational speed of the wheel (11), to obtain an updated longitudinal slip,
      ∘ determine an updated tire force attained when the wheel (11) is operated using the updated longitudinal slip, and
      ∘ when the updated tire force and updated longitudinal slip fulfills an iteration condition, replace the second longitudinal slip with the updated longitudinal slip, the iteration condition at least comprises that the updated tire force is greater than the second tire force.

5. The computer system (700) of claim 4, wherein the processing circuitry (702) is configured to iterate the updating process until the iteration condition is not fulfilled.

6. The computer system (700) of claim 5 wherein the iteration condition relates to an increase in longitudinal slip and tire force of the updated tire force and updated longitudinal slip as compared to the second longitudinal slip and second tire force, or as compared to an updated tire force and updated longitudinal slip of a previous iteration of the updating process.

7. The computer system (700) of claim 5 or 6 wherein the iteration condition relates to at least one of:

◦ a rate of change of longitudinal slip and tire force between the updated tire force and updated longitudinal slip as compared to the second longitudinal slip and the second tire force, or as compared to an updated tire force and updated longitudinal slip of a previous iteration of the updating process; or
◦ an angle of a slope as formed between the updated tire force and updated longitudinal slip as compared to the second longitudinal slip and second tire force, or as compared to an updated tire force and updated longitudinal slip of a previous iteration of the updating process.

8. The computer system (700) of claim 7 wherein the iteration condition relates to terminating the updating process when an angle of the slope is associated with a predefined angle.

9. The computer system (700) of any of claims 4-8 wherein the updating process comprises:

- increasing the longitudinal slip of the wheel (11) by a predefined amount to obtain the updated longitudinal slip, and
- determining the updated tire force in response to maintaining the updated longitudinal slip for a third time period.

10. The computer system (700) of any of claims 4-8 wherein the updating process comprises:

- continuously increasing the longitudinal slip of the wheel (11) to continuously obtain the updated longitudinal slip, and
- continuously determining the updated tire force as a result of the continuously updated longitudinal slip.

11. The computer system (700) of any of claims 1-10, wherein the processing circuitry is further configured to:

- determine at least one first force applied to at least one first axle of the vehicle (1) during the slip management process, and
- trigger the vehicle (1) to apply to at least one countering force to at least one second axle, for countering the determined at least one first force.

12. A vehicle comprising an electric motor (50) or combustion engine (51) configured to at least partly control a motion of a wheel (11) of the vehicle (1), wherein the vehicle comprises and/or is controlled by a computer system (700) according to any of claims 1-11.

13. A computer-implemented method for, as part of a slip management process, handling a longitudinal slip of a wheel (11) of a vehicle (1), wherein a motion of the wheel (11) being at least partly controlled by an electric motor (50) or combustion engine (51) of the vehicle (1), the method comprising, comprising:

- by a processing circuitry (702) of a computer system (700), determining (301, 601) a first longitudinal slip by receiving input indicating the first longitudinal slip, or by detecting a longitudinal slip of the wheel (11) when the motion of the wheel (11) fulfills a predefined triggering condition,
- by the processing circuitry (702), determining (302, 602) a first tire force of a tire of the wheel (11) by receiving input indicating the first tire force, or by:

◦ maintaining the first longitudinal slip of the wheel (11), and
◦ determining the first tire force by at least one of:

- determining a steady state tire force, or
- determining a tire force in response to maintaining the first longitudinal slip for a first time period;

- by the processing circuitry (702), with respect to a torque needed to provide the first tire force, controlling (303, 603) a torque applied to the wheel (11) to attain a second tire force, the second tire force being lower than the first tire force with respect to a predefined relationship, and,

- by the processing circuitry (702), determining (304, 604) a second longitudinal slip associated with the second tire force in response to at least one of: maintaining the second tire force for a second time period, or applying the second tire force as a steady state tire force,

- by the processing circuitry (702), based on the second longitudinal slip, determining (306, 605) a slip or slip interval for controlling the longitudinal slip of the wheel (11).

14. A computer program product comprising program code for performing, when executed by the processing circuitry (702), the method of claim 13.

15. A non-transitory computer-readable storage medium comprising instructions, which when executed by the processing circuitry (702), cause the processing circuitry (702) to perform the method of claim 13.

Fig. 1

Fig. 2a

Fig. 2b

Fig. 3

Fig. 4

m

11

20 50,51 20

702 700

Fig. 5

601.

602.

603.

604.

605.

Fig. 6

Fig. 7

Europäisches
Patentamt
European
Patent Office
Office européen
des brevets

# EUROPEAN SEARCH REPORT

**Application Number**

EP 24 21 6873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 091 164 B2 (VOLVO CAR CORP [SE]) 17 August 2021 (2021-08-17) | 1-3, 12-15 | INV. B60T8/175 |
| A | * column 6, line 12 - column 8, line 30; figures 3,6,7 * ----- | 4-11 | |
| A | US 2019/381989 A1 (NOZU TOMOHIRO [JP] ET AL) 19 December 2019 (2019-12-19) * paragraphs [0045] - [0056]; figure 5 * ----- | 1-15 | |
| A | US 2024/025267 A1 (ARIKERE ADITHYA [SE] ET AL) 25 January 2024 (2024-01-25) * paragraphs [0061] - [0080]; figures 1-6 * ----- | 1-15 | |

**TECHNICAL FIELDS SEARCHED (IPC)**

B60T

The present search report has been drawn up for all claims

| Place of search | Date of completion of the search | Examiner |
|---|---|---|
| Munich | 16 April 2025 | Raffaelli, Leonardo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 24 21 6873

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | | Publication date | Patent family member(s) | | Publication date |
|---|---|---|---|---|---|
| US 11091164 | B2 | 17-08-2021 | CN | 108791298 A | 13-11-2018 |
| | | | EP | 3398825 A1 | 07-11-2018 |
| | | | US | 2018319404 A1 | 08-11-2018 |
| US 2019381989 | A1 | 19-12-2019 | CN | 110667586 A | 10-01-2020 |
| | | | DE | 102019116231 A1 | 19-12-2019 |
| | | | JP | 2019217838 A | 26-12-2019 |
| | | | US | 2019381989 A1 | 19-12-2019 |
| US 2024025267 | A1 | 25-01-2024 | CN | 114572213 A | 03-06-2022 |
| | | | CN | 116547180 A | 04-08-2023 |
| | | | EP | 4001029 A1 | 25-05-2022 |
| | | | EP | 4244105 A1 | 20-09-2023 |
| | | | JP | 2023552963 A | 20-12-2023 |
| | | | KR | 20230107599 A | 17-07-2023 |
| | | | US | 2022153146 A1 | 19-05-2022 |
| | | | US | 2024025267 A1 | 25-01-2024 |
| | | | WO | 2022100907 A1 | 19-05-2022 |

For more details about this annex : see Official Journal of the European Patent Office, No. 12/82